# EUROPEAN PATENT SPECIFICATION

(11) **EP 0 203 106 B1**
(45) Date of publication and mention of the grant of the patent: **27.01.1993**
(21) Application number: 85905594.9
(22) Date of filing: 05.11.1985
(51) Int. Cl.: B32B 27/12, B32B 1/02, B32B 1/08

(54) **LAYERED FABRIC**
MEHRSCHICHTIGES GEWEBE
TISSU A COUCHES MULTIPLES

(30) Priority: 05.11.1984 AU 79/83
(43) Date of publication of application: 03.12.1986
(73) Proprietor: RHEEM AUSTRALIA LIMITED, Sydney, NSW 2000 (AU)
(72) Inventor: DELLER, Paul, Nicholas, North Eltham, VIC 3065 (AU); TERRY, Peter, Richards, Berwick, VIC 3806 (AU)
(74) Representative: Perry, Robert Edward
(86) International application number: AU8500269
(87) International publication number: WO8602883

(56) References cited:
- EP-A- 0 125 645
- EP-A- 0 133 119
- AU-A-23 798 /70
- AU-B-13 087 /83
- DE-A- 2 226 671
- GB-A- 930 100
- GB-A- 1 241 921
- GB-A- 1 265 754
- GB-A- 1 291 412
- US-A- 3 607 616
- US-A- 4 501 856

## Description

This invention relates to a layered fabric which is substantially impervious and is thus useful as large diameter collapsible hose, and as a containment vessel including a liner for water storage and reticulation equipment, for example.

The layered fabric is particularly useful in applications as cited above in which a need exists to form leak tight joints or seams in such hoses or liners.

The invention particularly relates to a layered fabric comprising a filamentary layer providing an essentially reinforcing contribution to the fabric in conjunction with at least two other layers contributing in combination an impervious property. Additional layers can be included to provide further protection in an outdoor rural environment, for example.

Examples of such fabrics can be found described in Australian Patent Specifications Nos. AU-A-23 798/70 and AU-B-13 087/83, British Patents Nos. GB-A-1 241 921 and GB-A-930 100, German Patent Specification No. DE-A-2 226 671 and European Patent Specification No. EP-A-0 125 645.

The above described layered fabric is exceptionally advantageous when formed into collapsible hose of typical diameter of 250 mm when made from a composite layered fabric of flexible synthetic plastics. Using a laminate enables the highly economical manufacture of such hose having the advantages of low mass per unit length in relationship to its diameter and its carrying capacity, while at the same time displaying exceptional damage, overpressure, puncture and weather resistance.

Hoses of this general type are known and are usefully employed for example in rural agriculture, flood mitigation and civil engineering site de-watering. The fluidised conveyance of particulate material through such hoses is also practised. Known hoses suffer from certain disadvantages; one type made from a single layer of polyolefin film suffers in that the nominally 250 mm diameter hose is only able to withstand an internal pressure of about 20 kPa and has very poor tear, abrasion, puncture and weather resistance. Another known type is made from a woven polyester fabric coated with an extrusion melt coated layer of polyvinyl chloride on each side. Although this type has satisfactory resistance to the rigours of use it is very heavy to handle. Also it is of high cost due to the high material costs as well as the slow production rate obtaining when welding the longitudinal seam.

A hose made from the layered fabric of the present invention substantially overcomes, or ameliorates, the limitations of such earlier types of hose construction because the new and useful layered fabric has an unexpectedly useful balance of properties between high performance and low cost.

### SUMMARY

According to a first aspect of the present invention there is provided a method of forming a layered fabric said method comprising the steps of forming a substrate layer by coating a layer of filamentary plastics material with a first layer of polyolefin polymer, said first layer comprising one surface of the finished fabric; and
laminating said substrate layer to a second layer comprising a separate extruded layer of polyolefin polymer; said second layer forming the other surface of the finished fabric, and said substrate layer and second layer being secured together by a melt extruded thermoplastic polymer.

According to a second aspect of the invention there is provided a containment vessel made from the fabric made according to the first aspect of the invention.

A particularly significant embodiment of the second aspect of the invention is one in which the liquid containment vessel is a longitudinally seamed, collapsible hose.

A particularly advantageous and significant embodiment of the first aspect of the invention is the layered fabric having the filamentary layer comprising a flexible web or strip of indefinite length composed of woven tapes of stretched polyolefin being warp tapes extending lengthways along the web and weft tapes extending transversely across the web. In a preferred and important embodiment the woven polyolefin layer is a substrate for a layer of low density polyolefin film on either side. In a most preferred version the two outer layers are of substantially equal width to that of the filamentary layer and are adhesively bonded to the woven layer over their full area of mutual contact. The preferred bonding adhesive is an extruded melt coat of a substantially polyolefin composition such as low density polyethylene (LDPE).

### DESCRIPTION OF THE DRAWINGS

Some embodiments of the present invention will be described with reference to the accompanying drawings in which:
Fig. 1 is a transverse cross-section of the longitudinal seam portion of a hose made from the laminate of a first embodiment; and
Fig. 2 is a similar cross-section of a hose made from the fabric of a second embodiment.

### DETAILED DESCRIPTION

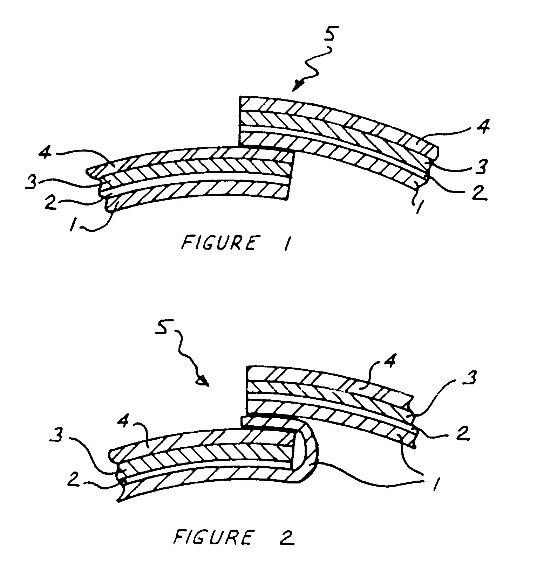

In Figure 1, the fabric of the first embodiment of the present invention is shown in the manner in which it is most economically and conveniently formed into a hose 5 having a lap or overlap type seam which extends longitudinally.

The layer forming the inside of the hose 5 as partly depicted in Fig 1 is a separately extruded layer of low density polyethylene (LDPE). This is referred to as the inner layer. The next adjacent layer 2 is an extrusion melt coated layer of LDPE which joins the inner layer 1 to the filamentary layer 3, in this case woven from stretched tapes of high density polyethylene. The other (outer) surface of the filamentary layer 3 is coated with an extrusion melt coat 4 of LDPE, which preferably contains additives capable of imparting resistance to abrasion and/or ultra-violet radiation.

Fig 2 shows a second embodiment of the hose in which the inner layer 5 overhangs the remainder of the multi-layered fabric to enable a seam to be fabricated in which the inner layer 1 of LDPE is enabled to be seamed in an overlap type seam as shown.

### EXAMPLE 1.

A laminated structure was manufactured to the following specification:-

| Layer, as numbered per Figure 1 | Material | Nominal thickness or mass per unit area |
|---|---|---|
| 1. Separately extruded film or inner layer. | Blend of LDPE and linear LDPE | 50 micrometres |
| 2. Melt extruded adhesive layer | LDPE | 40 to 50 micrometres |
| 3. Filamentary layer. | Stretched tapes of HDPE woven as warp and weft. | 160 grams per square metre |
| 4. Outer layer - | LDPE melt extruded with UV and abrasion resistant additives. | 40 to 50 micrometres |

The layered fabric was formed into a very long hose of 250 mm diameter and wall thickness approximately 0.3 mm by overlapping opposing edges of the layered fabric by 45 mm and then using heat and pressure to form a seam, by the hot air welding method in this case. At least equally satisfactory seams can be formed by ultrasonically welded or adhesive bonding methods. The resultant hose was tested by pumping water through it at a steady head of 60 kPa with occasional overpressure transients as high as 300 kPa. The hose remained substantially leaktight and remained so over the duration of the test (several hours) despite being run over several times (while water filled) by a heavy loader type vehicle fitted with tractor type tyres. The performance of this hose was regarded as remarkable in view of its low mass of 180 grams per lineal metre.

Prior art type hoses without a filamentary layer failed under considerably less arduous service and those of the polyester fabric type coated with PVC only displayed comparable performance despite being approximately three times the weight and taking three times as long to seam weld as the hose as encompassed by this example.

Other hoses where an inner LDPE layer was not separately extruded but was a melt coat of the same material leaked profusely under test from pinholes formed partly as a result of circumferential stretching of the hose under the pressure head obtaining during the test. The leakage was particularly high at the welded seam region.

Variations include a variety of generally similar materials for the filamentary layer; as well as polyolefin materials, polyester, nylon and other synthetic or natural fibres can be included as part or all of the filamentary layer which can include woven or non-woven constructions.

The several layers can be formulated or selected with specific desired properties, including, for example, UV and abrasion resistance, fire retardance, acceptability for contact with potable water, and colour for identification purposes. The number of seams in a hose or tube is not limited to one in number and the seam configuration is not limited to the lap (ie: overlap) type as illustrated but can be the fin type. Rather than forming the hose or tube by forming a longitudinal seam it can be formed by spirally winding and seaming.

It will be apparent that a most advantageous embodiment of a hose according to the present invention is one in which a multi-layer web or strip of indefinite length is formed into a hose by heat and pressure welding a longitudinal lap seam. The hose is composed of an internal layer of separately extruded LDPE, preferably bonded to a polyolefin layer which in turn is coated externally by a melt extruded layer of LDPE. This outer layer can include additives to enhance ultra-violet stability of the hose when exposed to direct sunlight and/or additives to impart abrasion resistance.

### USES AND ADVANTAGES

The layered fabric disclosed shows particular advantage when constructed into a layflat, collapsible hose, of diameter typically 100 mm or greater where advantages over known prior art hoses of similar types are as follows:
1. Excellent abrasion, puncture, tear, pressure and weather resistance when compared to known single layer hoses of the same general class used for similar purposes, and
2. Highly economical manufacture with approximately three times faster rates of seam formation than known prior art multi-layer hoses of the same general type. As well, the hose is of low mass, has relatively low material costs and can be more easily fitted with lateral outflow fittings than known multi-layer types.

Although the preferred embodiment is a hose, the above described fabric can be made into other containment vessels such as tank liners, dam liners, and the like.

The foregoing describes only some embodiments of the present invention and modifications, obvious to those skilled in the art, can be made thereto without departing from the scope of the present invention.

## Claims

1. A method of forming a layered fabric said method comprising the steps of forming a substrate layer by coating a layer of filamentary plastics material with a first layer of polyolefin polymer, said first layer comprising one surface of the finished fabric; and
laminating said substrate layer to a second layer comprising a separate extruded layer of polyolefin polymer; said second layer forming the other surface of the finished fabric, and said substrate layer and second layer being secured together by a melt extruded thermoplastic polymer.

2. A method as claimed in claim 1 wherein said polyolefin polymer is polyethylene.

3. A method as claimed in claim 1 or 2 wherein said polyolefin polymer is low density.

4. A method as claimed in claim 1, 2 or 3 wherein said thermoplastic polymer is polyethylene.

5. A method as claimed in any one of claims 1 to 4 wherein said filamentary plastics material is selected from the group consisting of polyolefins, polyesters and nylon.

6. A method as claimed in claim 5 wherein said filamentary plastics material comprises high density polyethylene tapes woven as warp and weft.

7. A liquid containment vessel formed from a layered fabric made in accordance with the method according to any one of claims 1 to 6 wherein said vessel has an inner surface formed by said second layer and an area of said fabric is formed into a generally enclosed configuration.

8. A vessel as claimed in claim 7 having a seam.

9. A vessel as claimed in claim 8 wherein said seam is an overlapped seam formed from two strata of said fabric.

10. A vessel as claimed in claim 9 wherein said second layer is extended beyond an inner edge of said overlapped seam and secured between said two strata of said fabric.

11. A vessel as claimed in claim 10 wherein said seam is heat welded, ultrasonically welded or adhesively bonded.

12. A vessel as claimed in claim 8 wherein said seam has a configuration selected from the group consisting of overlap and fin seams.

13. A vessel as claimed in any one of claims 7 to 12 and comprising a hose.

## Patentansprüche

1. Verfahren zur Herstellung eines mehrschichtigen Gewebes, umfassend die Schritte der Herstellung einer Substratschicht durch Beschichten einer Läge von fädigem Plastikmaterial mit einer ersten Schicht von Polyolefinpolymer, die eine Oberfläche des fertigen Gewebes aufweist, und des geschichteten Aufbringens der Substratschicht auf eine zweite Schicht, enthaltend eine gesondert extrudierte Schicht von Polyolefinpolymer, wobei die zweite Schicht die andere Oberfläche des fertigen Gewebes bildet, und Substratschicht und zweite Schicht durch ein geschmolzen extrudiertes thermoplastisches Polymer miteinander fest verbunden werden.

2. Verfahren nach Anspruch 1, dadurch gekennzeichnet, daß das Polyolefinpolymer Polyäthylen ist.

3. Verfahren nach Anspruch 1, dadurch gekennzeichnet, daß das Polyolefinpolymer geringe Dichte hat.

4. Verfahren nach Anspruch 1, 2 oder 3, dadurch gekennzeichnet, daß das thermoplastische Polymer Polyäthylen ist.

5. Verfahren nach einem der Ansprüche 1 bis 4, dadurch gekennzeichnet, daß das fädige Plastikmaterial aus einem Polyolefin, Polyester oder Nylon besteht.

6. Verfahren nach Anspruch 5, dadurch gekennzeichnet, daß das fädige Plastikmaterial aus Polyäthylenbändern hoher Dichte besteht, die in Kette und Schuß gewebt sind.

7. Gefäß zur Aufnahme von Flüssigkeiten, aus einem Mehrschichtgewebe hergestellt nach dem Verfahren nach einem der Ansprüche 1 und 6, dadurch gekennzeichnet, daß die innere Oberfläche des Gefäßes von der zweiten Schicht gebildet ist und eine Fläche des Gewebes in eine im großen und ganzen geschlossene Form gebracht ist.

8. Gefäß nach Anspruch 7, gekennzeichnet durch eine Naht.

9. Gefäß nach Anspruch 8, dadurch gekennzeichnet, daß die Naht eine überlappende Naht aus zwei Lägen des Gewebes ist.

10. Gefäß nach Anspruch 9, dadurch gekennzeichnet, daß sich die zweite Schicht über eine Innenkante der überlappenden Naht erstreckt und zwischen zwei Lagen des Gewebes befestigt ist.

11. Gefäß nach Anspruch 10, dadurch gekennzeichnet, daß die Naht heiß verschweißt, mit Ultraschall verschweißt, oder verklebt ist.

12. Gefäß nach Anspruch 8, dadurch gekennzeichnet, daß die Naht die Form einer überlappenden oder einer Rippennaht hat.

13. Gefäß nach einem der Ansprüche 7 bis 12, dadurch gekennzeichnet, daß es aus einem Schlauch besteht.

## Revendications

1. Un procédé de formation d'un tissu à couches multiples, ledit procédé comprenant les étapes de formation d'une couche de substrat par revêtement d'une couche en matière plastique filamentaire par une première couche de polyoléfine d'un polymère polyoléfinique, ladite première couche comprenant une surface du tissu fini et de stratification de ladite couche de substrat à une deuxième couche comprenant une couche extrudée séparée de polymère polyoléfinique; la deuxième couche formant l'autre surface du tissu fini et ladite couche de substrat et ladite seconde couche étant fixée l'une à l'autre par un polymère thermoplastique extrudé à l'état fondu.

2. Un procédé tel que revendiqué dans la revendication 1, dans lequel ledit polymère polyoléfinique est le polyéthylène.

3. Un procédé tel que revendiqué dans la revendication 1 ou 2, dans lequel ledit polymère polyoléfinique est un polymère de basse densité.

4. Un procédé tel que revendiqué dans la revendication 1, 2 ou 3, dans lequel ledit polymère thermoplastique est du polyéthylène.

5. Un procédé tel que revendiqué dans l'une quelconque des revendications 1 à 4, dans lequel ladite matière plastique filamentaire est choisie dans le groupe comprenant les polyoléfines, les polyesters et le nylon.

6. Un procédé tel que revendiqué dans la revendication 5, dans lequel ladite matière plastique filamentaire comprend des rubans de polyéthylène haute densité tissés en formant la chaîne et la trame.

7. Un récipient destiné à contenir ou confiner du liquide, formé d'un tissu à couches multiples fabriqué conformément au procédé selon l'une quelconque des revendications 1 à 6, dans lequel ledit récipient présente une surface interne formée par ladite deuxième couche et une zone dudit tissu est formée de façon à présenter une configuration générale ou confinée.

8. Un récipient tel que revendiqué dans la revendication 7, présentant un joint.

9. Un récipient tel que revendiqué dans la revendication 8, dans lequel ledit joint est un joint à recouvrement formé des deux couches dudit tissu.

10. Un récipient tel que revendiqué dans la revendication 9, dans lequel ladite deuxième couche s'étend au-delà d'un bord interne dudit joint de recouvrement et est fixée entre lesdites deux couches dudit tissu.

11. Un récipient tel que revendiqué dans la revendication 10, dans lequel ledit joint est soudé la chaleur, ou les d'ultrasons ou et formé par un adhésif.

12. Un récipient tel que revendiqué dans la revendication 8, dans lequel ledit joint présente une configuration choisie dans le groupe comprenant les joints à recouvrement et les joints à nervure.

13. Un récipient tel que revendiqué dans l'une quelconque des revendications 7 à 12, et comprenant un conduit flexible.
